(19) Europäisches Patentamt
European Patent Office
Office européen des brevets

(11) **EP 3 644 031 B1**

(12) **EUROPEAN PATENT SPECIFICATION**

(45) Date of publication and mention
of the grant of the patent:
**04.01.2023 Bulletin 2023/01**

(21) Application number: **18202417.4**

(22) Date of filing: **24.10.2018**

(51) International Patent Classification (IPC):
***G01J 9/02*** *(2006.01)*

(52) Cooperative Patent Classification (CPC):
**G01J 9/0246**

(54) **WAVELENGTH METER**

WELLENLÄNGENMESSER

COMPTEUR DE LONGUEUR D'ONDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2020 Bulletin 2020/18**

(73) Proprietor: **Nokia Technologies Oy
02610 Espoo (FI)**

(72) Inventor: **Bitauld, David
Cambridge, CB2 8DL (GB)**

(74) Representative: **Sayer, Robert David
Venner Shipley LLP
200 Aldersgate
London EC1A 4HD (GB)**

(56) References cited:
**EP-A1- 3 306 836       WO-A1-2016/010528
WO-A2-2009/105633**

• **CHAO XIANG ET AL: "Integrated chip-scale
Si_3N_4 wavemeter with narrow free spectral
range and high stability", OPTICS LETTERS, vol.
41, no. 14, 15 July 2016 (2016-07-15) , page 3309,
XP055580113, US ISSN: 0146-9592, DOI:
10.1364/OL.41.003309**

## Description

### Field

Example embodiments relate to wavelength meters, and methods of determining a wavelength.

### Background

A wavelength meter, sometimes called a wavemeter, is a device for providing a measurement of wavelength of a wavelength source, for example of a narrow band optical signal such as from a laser. A wavelength meter may be used to monitor the wavelength, for example, of a tunable laser which may be subject to wavelength drift. Xiang, Chao et al. ("Integrated chip-scale Si3N4 wavemeter with narrow free spectral range and high stability", Vol. 41, No. 14, Optics Letters, 2016) discloses an integrated chip-scale wavemeter based on an unbalanced Mach-Zehnder interferometer.

### Summary

The matter for protection is defined in appended independent claims 1 and 14, with optional features being defined in the dependent claims appended thereto.

Disclosed herein is an apparatus, comprising: input means for receiving an optical signal from an optical source; a first interferometer means for receiving the optical signal from the input means and outputting a first output signal, the first interferometer means comprising a first reference arm and a first delay arm; a second interferometer means for simultaneously receiving the optical signal from the input means and outputting a second output signal, the second interferometer means comprising a second reference arm and a second delay arm, at least one of the second reference and the second delay arms of the second interferometer means being configured to have a different thermo-optic property than the corresponding first reference arm and the first delay arm of the first interferometer means; and means for determining a wavelength of the optical signal based on the first and second output signals. At least one of the reference and delay arms of the second interferometer means are configured to have a different thermo-optic coefficient to group index ($\theta:n_g$) ratio than the arms of the first interferometer means.

The first and second output signals may be indicative of a phase difference between the reference and delay arms of the first and second interferometer means, the means for determining the wavelength being configured to determine the wavelength based on said phase difference.

The first and second interferometer means may comprise Mach-Zehnder interferometers (MZIs).

At least one of said arms of the second interferometer means may have a different width and/or height to those of the first interferometer means. At least one of said arms of the second interferometer means may have a different cross-sectional shape to that of the first interferometer means.

At least one of said arms of the second interferometer means may be surrounded by a different material and/or is propagating into a different material than that of the first interferometer means. At least one of said arms of the second interferometer means may be formed of a different material than that of the first interferometer means.

The apparatus may further comprise a third interferometer means for simultaneously receiving the optical signal from the input means and outputting a third output signal, the third interferometer means comprising a third reference arm and a third delay arm, at least one of said arms of the third interferometer means being configured shorter than the corresponding arm of the first and second interferometer means, and wherein the wavelength determining means determines the wavelength based on the first, second and third output signals.

The apparatus may further comprise means for determining the linewidth of the optical signal based on the first and second output signals.

The input means may comprise a first Multi-Mode Interference (MMI) coupler, wherein the first reference and first delay arms are connected to a second MMI coupler for providing the first output signal and wherein the second reference and second delay arms are connected to a third MMI coupler for providing the second output signal.

The apparatus may be provided on a monolithic integrated circuit. The integrated circuit may further comprise the optical source. The optical source may be a laser. Disclosed herein is a method, comprising: receiving, at a first interferometer means, an optical signal from an optical source, the first interferometer means comprising a first reference arm and a first delay arm, to produce a first output signal; simultaneously receiving, at a second interferometer means, the optical signal from the optical source, the second interferometer means comprising a second reference arm and a second delay arm, to produce a second output signal, wherein at least one of the second reference and the second delay arms of the second interferometer means is configured to have a different thermo-optic coefficient to group index ($\theta:n_g$) ratio than the corresponding first reference and the first delay arm of the first interferometer means; and determining a wavelength of the optical signal based on the first and second output signals.

The method may further comprise simultaneously receiving at a third interferometer means the optical signal and outputting a third output signal, the third interferometer means comprising a third reference arm and a third delay arm, at least one of said arms of the third interferometer means being configured shorter than the corresponding arm of the first and second interferometer means, and wherein determining the wavelength determines the wavelength based on the first, second and third output signals.

The method may further comprise determining the linewidth of the optical signal based on the first and second output signals.

The method may be performed on a monolithic integrated circuit. The integrated circuit may further comprise the optical source. The optical source may be a laser.

Disclosed herein is an apparatus comprising: at least one processor, at least one memory directly connected to the at least one processor, the at least one memory including computer program code, and the at least one processor, with the at least one memory and the computer program code being arranged to perform the method of receiving, at a first interferometer means, an optical signal from an optical source, the first interferometer means comprising a first reference arm and a first delay arm, to produce a first output signal; simultaneously receiving, at a second interferometer means, the optical signal from the optical source, the second interferometer means comprising a second reference arm and a second delay arm, to produce a second output signal, at least one of the second reference and the second delay arms of the second interferometer means being configured to have a different thermo-optic property than the corresponding first reference and the first delay arm of the first interferometer means; and determining a wavelength of the optical signal based on the first and second output signals.

Disclosed herein is a computer program product comprising: a set of instructions which, when executed on an apparatus, is configured to cause the apparatus to carry out the method of receiving, at a first interferometer means, an optical signal from an optical source, the first interferometer means comprising a first reference arm and a first delay arm, to produce a first output signal; simultaneously receiving, at a second interferometer means, the optical signal from the optical source, the second interferometer means comprising a second reference arm and a second delay arm, to produce a second output signal, at least one of the second reference and the second delay arms of the second interferometer means being configured to have a different thermo-optic property than the corresponding first reference and the first delay arm of the first interferometer means; and determining a wavelength of the optical signal based on the first and second output signals.

Disclosed herein is a non-transitory computer readable medium comprising program instructions stored thereon for performing a method, comprising: receiving, at a first interferometer means, an optical signal from an optical source, the first interferometer means comprising a first reference arm and a first delay arm, to produce a first output signal; simultaneously receiving, at a second interferometer means, the optical signal from the optical source, the second interferometer means comprising a second reference arm and a second delay arm, to produce a second output signal, at least one of the second reference and the second delay arms of the second interferometer means being configured to have a different thermo-optic property than the corresponding first reference and the first delay arm of the first interferometer means; and determining a wavelength of the optical signal based on the first and second output signals.

Disclosed herein is an apparatus comprising: at least one processor; and at least one memory including computer program code which, when executed by the at least one processor, causes the apparatus: to receive, at a first interferometer means, an optical signal from an optical source, the first interferometer means comprising a first reference arm and a first delay arm, to produce a first output signal; to simultaneously receive, at a second interferometer means, the optical signal from the optical source, the second interferometer means comprising a second reference arm and a second delay arm, to produce a second output signal, at least one of the second reference and the second delay arms of the second interferometer means being configured to have a different thermo-optic property than the corresponding first reference and the first delay arm of the first interferometer means; and to determine a wavelength of the optical signal based on the first and second output signals.

**Brief Description of Drawings**

Example embodiments will now be described, by way of non-limiting example, with reference to the accompanying drawings, in which:

FIG. 1 is a schematic diagram of an interferometer according to some example embodiments;
FIG. 2 is a schematic diagram of a wavelength meter according to some example embodiments;
FIG. 3 is a schematic diagram of the FIG. 2 wavelength meter, employing multi-mode interference couplers;
FIG. 4 is a schematic diagram of another wavelength meter, employing an additional multi-mode interference coupler;
FIG. 5 is a flow diagram showing operations performed in determining at least a wavelength using example embodiments; and
FIG. 6 is an apparatus for performing operations referred to in relation to FIG. 5.

**Detailed Description**

Example embodiments herein relate to wavelength meters and methods of determining a wavelength. Example embodiments also relate to a computer program for performing the method.

As mentioned, a wavelength meter is a device for providing a measurement of the wavelength of a wavelength source. In examples herein, the wavelength source is a narrow band wavelength source such as light emitted by a laser, but example embodiments need not be limited to lasers. A laser source, such as a laser diode, produces a coherent beam of light through a process of optical amplification. Lasers are used in many systems such as optical disk drives, printers, scanners, medical instruments, fibre-optic communication systems, cutting and welding instruments, range and speed detectors, etc. Example medical instruments include bio sensing equipment, such as for Optical Coherence Tomography (OCT) and spectroscopy.

Knowledge of the current wavelength may be important for the reason that the source may be tuned to a specific wavelength for its intended purpose. In some example embodiments, any drift from a specific wavelength may be indicative of a fault or some external factor and may require feedback control in order to re-tune the source back to its required wavelength.

Factors which affect the accuracy of wavelength measurement include stability and temperature dependence.

Example embodiments herein provide a system involving at least two interferometers. An interferometer is a device for the measurement of small displacements, refractive index changes and/or surface irregularities. Typically, electromagnetic energy, e.g. light, from the input source is split into two beams that travel different paths and are then combined again to produce interference. The resulting interference provides information about the difference in optical path length, from which can be derived information, such as wavelength. Known types of interferometer include the Mach-Zehnder interferometer (hereafter referred to as "MZI") and the Michelson interferometer.

Example embodiments herein use said at least two interferometers to determine a wavelength of a source without the need for control or the need for knowledge of temperature. In this respect, temperature may affect the measurement and it is required to differentiate a wavelength change from a temperature change.

Example embodiments herein assume the use of MZIs.

An MZI is used to determine the relative phase shift variations between two beams derived by splitting light from a single source.

Example embodiments provide at least two MZIs, each of which is asymmetric, having a reference arm (r) and a delay (s) arm. The delay arm (s) is longer than the reference arm (r). Additionally, part of one of the arms (optical paths) of one interferometer has one or more different thermo-optic properties than the corresponding arm of the other interferometer. By different thermo-optic properties, it is meant that there is a different dependence of the effective index of the optical mode with respect to the temperature and the wavelength, e.g. expressed as:

$$\frac{\theta_1}{\theta_2} \neq \frac{n_{g1}}{n_{g2}}$$

where $\theta$ is the thermo-optic coefficient of a given arm and $\eta_g$ is the group index of a given arm.

By "corresponding" it is meant that the reference arm of the first interferometer may have one or more different thermo-optic properties than the reference arm of the second interferometer, or the delay arm of the first interferometer may have one or more different thermo-optic properties than the delay arm of the second interferometer.

The one or more different thermo-optic properties may be enabled by one or more of the corresponding reference or delay arms of the first and second interferometer means having different widths or heights, having different cross-sectional shapes, being surrounded by a different material and/or propagating into a different material, or being formed of different materials. For example, the arms may be provided as 220 nm think silicon strip waveguides, one of the arms having a width of 360 nm and the other, corresponding arm, having a width of 460 nm. The respective group indices would be 4.42 and 4.26 and the respective $T_o$ coefficients, for which see below, would be $1.6 \times 10^{-4}$ and $1.8 \times 10^{-4}$.

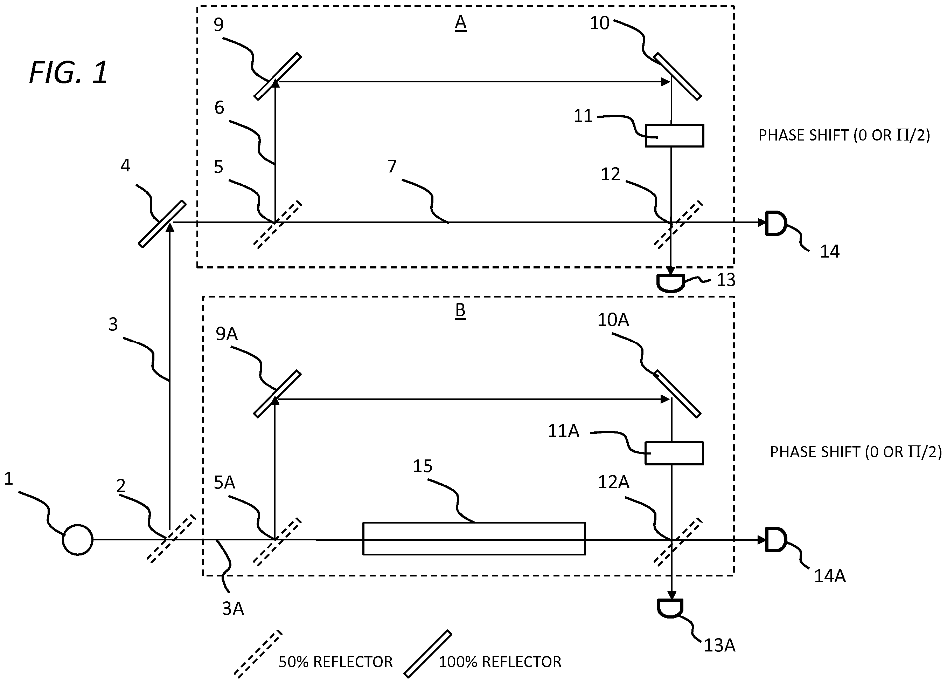

Referring to FIG. 1, which shows a wavelength meter using asymmetric MZIs in accordance with an example embodiment, a light beam from a source 1 is first split into two parts, i.e. upper and lower beams 3, 3A by a first beam splitter 2, e.g. a half-silvered mirror. The upper beam 3 has its phase changed by half a wavelength by the first beam splitter 2 and then changed again by half a wavelength by a first, fully-reflective mirror 4. The upper beam 3 then enters a first MZI sub-section "A" and the lower beam 3A enters a second MZI sub-section "B".

In the first MZI sub-section "A", the upper beam 3 is transmitted through a second beam splitter 5 giving some constant phase change and providing an upper beam 6 and a lower beam 7. The upper beam 6 is reflected by second and third mirrors 9, 10 and then passes, via a (zero or $\Pi/2$) phase shifter 11, through a third beam splitter 12 to a first detector 13. The lower beam 7 is transmitted through the second beam splitter 5, giving some constant phase change, and then through the third beam splitter 12 to a second detector 14.

The lower beam 3A from the first beam splitter 2 enters the second MZI sub-section "B", which is structured and arranged generally similar to that of the first MZI sub-section "A", and hence comprises fourth and fifth beam splitters 5A, 12A, fourth and fifth mirrors 9A, 10A, and third and fourth detectors 13A, 14A. However, the second MZI sub-section is arranged to have different thermo-optic properties by a representative element 15 which may represent, for example, use of a different material and/or use of any of the above examples. The element 15 is provided, in this example, in a path between the fourth and fifth beam splitters 5A, 12A.

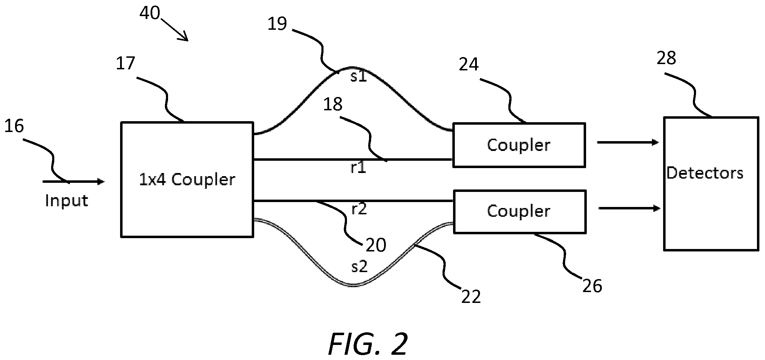

FIG. 2 is a schematic high-level diagram of a wavelength meter 40 according to an example embodiment, for determining a wavelength of an input light source 16.

The wavelength meter 40 may comprise a first coupler 17, a first interferometer means provided by a first reference arm 18 and a first delay arm 19, a second interferometer means provided by a second reference arm 20 and a second delay arm 22, and second and third couplers 24, 26. The first reference arm 18, and first delay arm 19 may connect to the second coupler 24 and the second reference arm 20, and second delay arm 22 may connect to the third coupler 26, to produce respective interferences. The couplers 17, 24, 26 may be any form of optical coupler, for example multi-mode interference (MMI) couplers, e.g. 4×4 MMI couplers, 90-degree hybrid, which can be fabricated on photonic integrated circuits, e.g. those comprising the laser diode itself. Other types of coupler may be employed. The output from each of the second and third couplers 24, 26 may be provided to detectors 28 for determining the wavelength.

As mentioned, one of the arms may have at least one different thermo-optic property than the other arms, using any of the above examples. In the shown example, the second delay arm 22 may have a different width than that of the first delay arm 19.

Accordingly, the measurements at the output of each of the second and third couplers 24, 26 can be used by the detectors 28 to calculate the phase difference between the signal coming from the first and second reference arms 18, 20 and signals from the first and second delay arms 19, 22.

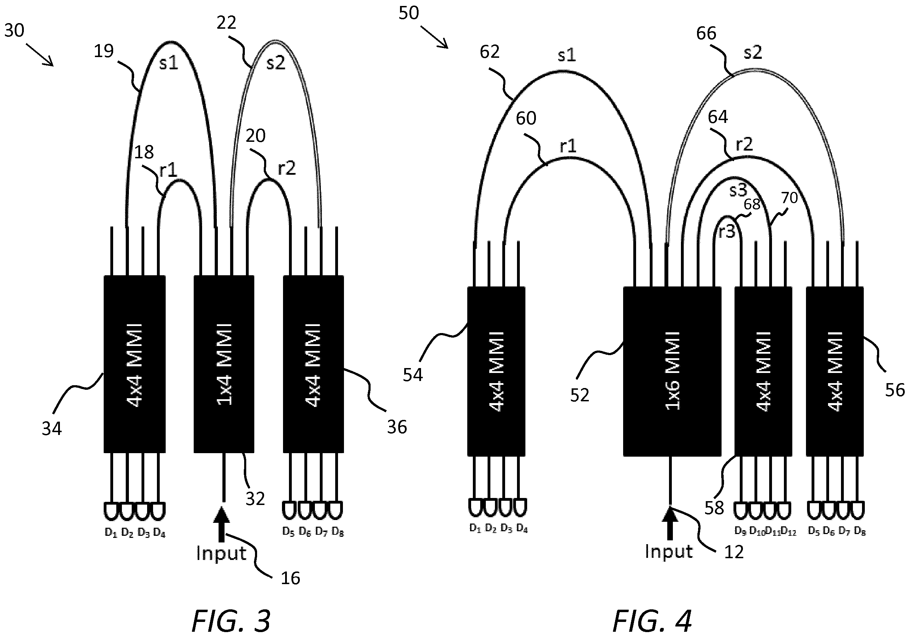

FIG. 3 is another schematic diagram of how the FIG. 2 schematic can be realised in an integrated circuit layout, using first, second and third MMIs 32, 34, 36. The first MMI 32 may be a 1×4 MMI coupler, whereas the second and third MMIs 34, 36 may be 4×4 MMI couplers. The various arms 18, 19, 20, 22 are shown using the same reference numerals.

It will now be explained how example embodiments enable an accurate and relatively fast wavelength determination independent of temperature.

The first interferometer means, comprising the coupled first reference arm 18 and first delay arm 19 produce optical signal amplitudes, after propagation in each arm, including uneven splitting and different losses.

The phase difference between the two signals is $\varphi_1$ and the detection efficiency of the detector is $\eta$.

The current generated by the four detectors at the output of the second MMI 34 is:

$$D_1 = \eta \left| r_1 + s_1 * e^{i\varphi_1} \right|^2$$

$$D_2 = \eta \left| r_1 + i * s_1 * e^{i\varphi_1} \right|^2$$

$$D_3 = \eta \left| r_1 - i * s_1 * e^{i\varphi_1} \right|^2$$

$$D_4 = \eta \left| r_1 - s_1 * e^{i\varphi_1} \right|^2.$$

From these measurements at the detectors 28, the two quadratures of the delayed signal can be obtained:

$$X_1 \equiv D_1 - D_4 = 4\eta r_1 s_1 * cos(\varphi_1)$$

$$Y_1 \equiv D_2 - D_3 = 4\eta r_1 s_1 * sin(\varphi_1)$$

The phase can be unambiguously calculated using the atan2 function:

$$tan(\varphi_1) = \frac{Y_1}{X_1}$$

$$\varphi_1 = atan2(X_1, Y_1)$$

Note that the obtained measurement of the phase $\varphi_1$ is independent of the input amplitude, uneven splitting, losses and detector efficiency (providing all the detector efficiencies are equal). This makes the measurement very robust.

Noting that in example embodiments, one of the paths has a different thermo-optic coefficient, the relation between the wavelength and the phase can thus be expressed as:

$$\varphi_1 = \Delta L_1 n_{eff} \frac{2\pi}{\lambda}$$

wherein $\Delta L$ is the length difference between the two arms, $\lambda$ the optical wavelength (to be measured) and $n_{eff}$ is the effective index of the waveguide, which can be expressed as:

$$n_{eff}(\lambda) \cong n_{eff}(\lambda_0) + (T - T_0)\left.\frac{\partial n_{eff}}{\partial T}\right|_{T_0,\lambda_0} + (\lambda - \lambda_0)\left.\frac{\partial n_{eff}}{\partial \lambda}\right|_{T_0,\lambda_0}$$

with:

$a = n_{eff}(\lambda_0, T_0)$, the effective index at $\lambda_0$, $T_0$,

$b = \left.\frac{\partial n_{eff}}{\partial \lambda}\right|_{T_0,\lambda_0}$ , the first order wavelength dispersion,

$n_g = a - \lambda_0 b$ , the group index,

$\theta = \left.\frac{\partial n_{eff}}{\partial T}\right|_{T_0,\lambda_0}$ , the thermo-optic coefficient,

$\Delta T = T - T_0$, the temperature difference with $T_0$, and
$\Delta \lambda = \lambda - \lambda_0$, the wavelength difference with $\lambda_0$.

The two interferometer means provide the values of the two phases $\varphi_1$, $\varphi_2$ from which the two unknowns $\lambda$ and T may be extracted with the following equation system:

$$\varphi_1 = \Delta L_1 \frac{2\pi}{\lambda}(a_1 + b_1 \Delta\lambda + \theta_1 \Delta T),$$

and

$$\varphi_2 = \Delta L_2 \frac{2\pi}{\lambda}(a_2 + b_2 \Delta\lambda + \theta_2 \Delta T).$$

In order for the solutions to be defined, the Jacobian determinant of the system needs to be different from zero:

$$J = \begin{pmatrix} -\Delta L_1 \frac{2\pi}{\lambda_0^2} n_{g1} & \Delta L_1 \frac{2\pi}{\lambda_0} \theta_1 \\ -\Delta L_2 \frac{2\pi}{\lambda_0^2} n_{g2} & \Delta L_2 \frac{2\pi}{\lambda_0} \theta_2 \end{pmatrix}$$

and the condition $|J| \neq 0$ is equivalent to:

$$\frac{\theta_1}{\theta_2} \neq \frac{n_{g1}}{n_{g2}}.$$

This condition can be respected so that the wavelength meter can separate, without ambiguity, the effect of the wavelength and the temperature.

From the equation system, the wavelength can be deduced independently of the temperature by performing:

$$\lambda = \frac{\theta_2 n_{g1} - \theta_1 n_{g2}}{\left(\frac{\varphi_1 \theta_2 \Delta L_2 - \varphi_2 \theta_1 \Delta L_1}{2\pi \Delta L_1 \Delta L_2}\right) - \theta_2 b_1 + \theta_1 b_2}.$$

The wavelength meter 10 according to example embodiments may offer technical effects in terms of one or more of having a relatively simple structure using a small number of standard components, being stable, having temperature independent, not requiring moving mechanical or tunable (electro-optic, thermo-optic) elements.

A long delay can mean a small free spectral range (FSR). The measured phase is the modulo $2\pi$ remainder of the total phase difference, which means that while varying the wavelength, the same measurements are obtained every integer number of FSR. In order to remove the periodicity of the measurement, and obtain a larger wavelength range of unambiguous measurement, an additional interferometer means with a shorter delay (and therefor a larger free spectral range) can be added.

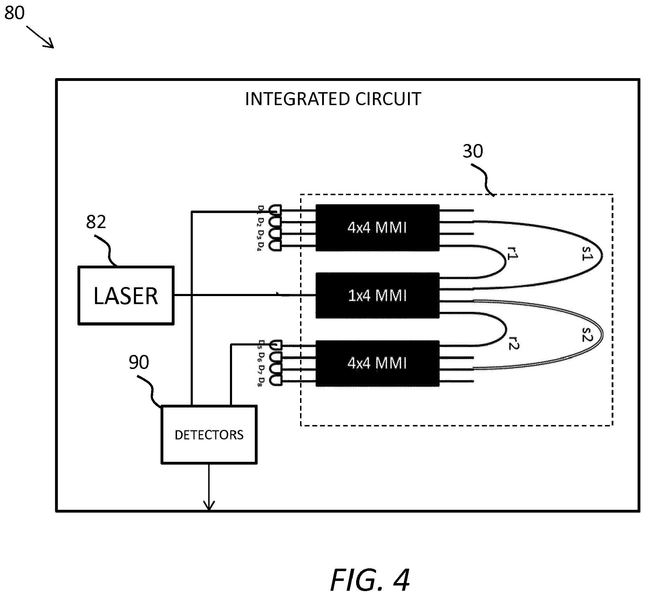

Referring to FIG. 4, another example wavelength meter 50 embodiment is shown which is similar to that shown in FIG. 3 and is likewise realisable on an integrated circuit using suitable MMIs. The wavelength meter 50 comprises a first coupler 52, being a 1×6 MMI coupler, and second, third a fourth couplers 54, 56, 58, each being 4×4 MMI couplers. A first interferometer means is provided between the first coupler 52 and the second coupler 54, comprising a first reference arm 60 and a first delay arm 62. A second interferometer means is provided between the first coupler 52 and the third coupler 56, comprising a second reference arm 64 and a second delay arm 66. A third interferometer means is provided between the first coupler 52 and the fourth coupler 58, comprising a third reference arm 68 and a third delay arm 70.

The arm length difference (of the third reference arm 68 and third delay arm 70) can be calculated to match the desired wavelength range (i.e. FSR).

The phase $\varphi = \Delta L n_{eff} \frac{2\pi}{\lambda}$ can be a known modulo $2\pi$ function.

It can be said that:

$$\varphi = \Delta L n_{eff} \frac{2\pi}{\lambda} = atan2(X_1, Y_1) + 2N\pi$$

where N is an integer to be determined later, and

$$\lambda^{-1} = \frac{atan2(X_1, Y_1)}{2\pi \Delta L n_{eff}} + \frac{N}{\Delta L n_{eff}}.$$

The arm length difference $\Delta L$ determines the wavelength range $\Delta\lambda$ within which is needed an unambiguous measurement from the wavelength meter. This range can be chosen to encompass the range of the detectors or the possible values taken by the measured source wavelength.

For a desired range of $\lambda_0 \pm \Delta\lambda/2$, N and $\Delta L$ are selected so that:

$$\Delta L \sim \frac{\lambda^2}{\Delta\lambda n_g},$$

and

$$N = round\left(\frac{\Delta L n_g}{\lambda_0}\right),$$

then

$$\Delta L = \frac{N\lambda_0}{n_g}.$$

A further advantage of example embodiments is the ability to measure the linewidth and coherence of the optical source.

The coherence length, coherence time and linewidth of an optical source such as a laser are related with each by the expression:

$$L_c = c\tau_c = \frac{c}{\pi\Delta v}.$$

The coherence time of an optical signal can be obtained by performing an autocorrelation. If a Lorentzian linewidth is assumed, the modulus of the autocorrelation decreases exponentially with the delay:

$$|A(\tau)| = e^{\frac{-\tau}{\tau_c}}.$$

The autocorrelation is defined by:

$$A(\tau) = \langle r(t) * r(t-\tau)^* \rangle,$$

$$|A(\tau)|^2 = \langle Re(r(t) * r(t-\tau)^*) \rangle^2 + \langle Im(r(t) * r(t-\tau)^*) \rangle^2,$$

$$|A(\tau)|^2 = r^2 \langle cos(\varphi(t)) \rangle^2 + r^2 \langle sin(\varphi(t)) \rangle^2,$$

(where <> means sum over time).

The outputs X and Y of the interferometer may be used to calculate the autocorrelation for a delay $\tau = \frac{\Delta L n_{eff}}{c}$ :

$$|A(\tau)|^2 = \left(\frac{r}{4\eta s}\right)^2 (X^2 + Y^2).$$

By calibrating the factor $\frac{r}{4\eta s}$, which includes the detector efficiency and the amplitude in each arm, it is possible to estimate the coherence time.

However, the need for calibration can be removed if interferometers with two different delays are provided, as described herein, i.e.:

$$|A(\tau_1)| = e^{\frac{-\tau_1}{\tau_c}},$$

and

$$|A(\tau_2)| = e^{\frac{-\tau_2}{\tau_c}}.$$

Then:

$$\tau_c = \frac{\tau_2 - \tau_2}{ln(|A_1|) - ln(|A_2|)},$$

and

$$\tau_c = 2\frac{\tau_2 - \tau_2}{ln\left(X_1{}^2 + Y_1{}^2\right) - ln\left(X_2{}^2 + Y_2{}^2\right)}.$$

This measurement is independent of the calibration and the source power.

This measurement can also be used to check whether the laser is single mode or has several modes. The value $X^2 + Y^2$ will be lower if there is more than one mode.

Each interferometer means can give us information on the autocorrelation at a given delay. By using two (or more) interferometers, more complex autocorrelations can be measured and hence more information on the spectrum can be deduced. If the spectrum is sparse in frequency, it can be accurately measured with a few random autocorrelation points in a "compressed sensing" scheme.

FIG. 4 is a schematic diagram showing the FIG. 2 wavelength meter 30 embodied on a monolithic integrated circuit 80, together with the optical source 82 (e.g. a laser diode) it is to measure the wavelength (and/or linewidth and/or coherence) of, and the detectors 90. Thus, the relatively simplicity and accuracy of the provided wavelength meter 30 (and the other example embodiments) enables a single-chip solution providing all functionality. Other system modules may also be integrated on the integrated circuit 80, including systems that the laser diode 82 is used for.

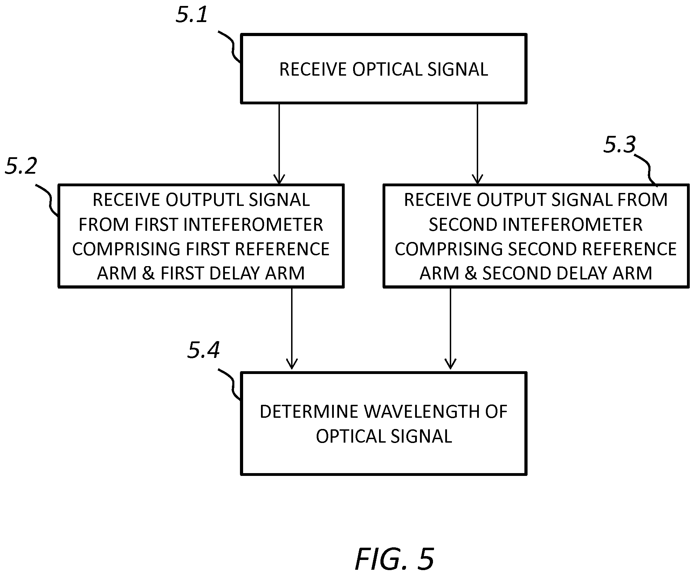

FIG. 5 is a flow diagram showing operations that may be performed by a wavelength meter in accordance with example embodiments.

A first operation 5.1 comprises receiving an optical signal. Subsequent operations 5.2 - 5.4 may then be performed .

A second operation 5.2 comprises receiving a first output signal (based on the received optical signal) from a first interferometer comprising a first reference arm and a first delay arm.

A third operation 5.3, performed substantially simultaneously with the second operation 5.2, comprises receiving a second output signal (based on the same received optical signal) from a second interferometer comprising a second reference arm and a second delay arm, wherein one of the arms has a different thermo-optic property than the corresponding arm of the first interferometer.

A fourth operation 5.4 comprises determining using the first and second output signals the wavelength (and/or linewidth and/or coherence).

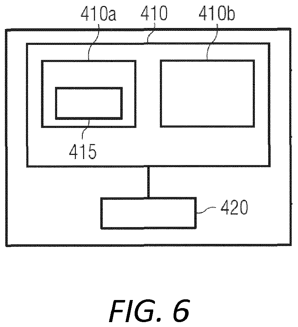

FIG. 6 shows an apparatus according to an example embodiment, which may comprise the one or more detectors, whether provided on the integrated circuit of FIG. 4 or as a separate system. The apparatus comprises at least one processor 420 and at least one memory 410 directly or closely connected to the processor. The memory 410 includes at least one random access memory (RAM) 410b and at least one read-only memory (ROM) 410a. Computer program code (software) 415 is stored in the ROM 410a. The apparatus may be connected with a user interface UI for instructing the apparatus and/or for outputting the results (e.g. the wavelength). The at least one processor 420, with the at least one memory 410 and the computer program code 415 are arranged to cause the apparatus to at least perform at least the method according to Fig. 5, operations 5.2 - 5.4.

A memory may be volatile or non-volatile. It may be e.g. a RAM, a SRAM, a flash memory, a FPGA block ram, a DCD, a CD, a USB stick, and a blue ray disk.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some example embodiments may be implemented in the cloud.

It is to be understood that what is described above are example embodiments. However, it should be noted that the description of the example embodiments is given by way of example only and that various modifications may be made without departing from the scope as defined by the appended claims.

**Claims**

**1.** A wavelength meter (40) for differentiating the effect of a wavelength change from the effect of a temperature change, comprising:

input means for receiving an optical signal from an optical source (1, 16);
a first interferometer means for receiving the optical signal (3) from the input means and outputting a first output signal, the first interferometer means comprising a first reference arm (18) and a first delay arm (19);
a second interferometer means for simultaneously receiving the optical signal (3A) from the input means and outputting a second output signal, the second interferometer means comprising a second reference arm (20) and a second delay arm (22), wherein at least one of the second reference and the second delay arms of the second interferometer means is configured to have a different thermo-optic coefficient to group index ($\theta{:}n_g$) ratio than the corresponding first reference arm and the first delay arm of the first interferometer means; and
means (28) for determining a wavelength of the optical signal based on the first and second output signals.

2. The wavelength meter of claim 1, wherein the first and second output signals are indicative of a phase difference between the reference and delay arms of the first and second interferometer means, the means for determining the wavelength being configured to determine the wavelength based on said phase difference.

3. The wavelength meter of claim 1 or claim 2, wherein the first and second interferometer means comprise Mach-Zehnder interferometers.

4. The wavelength meter of any preceding claim, wherein the arms are waveguides and wherein at least one of said arms of the second interferometer means has a different width and/or height to those of the first interferometer means.

5. The wavelength meter of any preceding claim, wherein the arms are waveguides and wherein at least one of said arms of the second interferometer means has a different cross-sectional shape to that of the first interferometer means.

6. The wavelength meter of any preceding claim, wherein at least one of said arms of the second interferometer means is surrounded by a different material and/or is propagating into a different material than that of the first interferometer means.

7. The wavelength meter of any preceding claim, wherein at least one of said arms of the second interferometer means is formed of a different material than that of the first interferometer means.

8. The wavelength meter of any preceding claim, further comprising a third interferometer means for simultaneously receiving the optical signal from the input means and outputting a third output signal, the third interferometer means comprising a third reference arm and a third delay arm, at least one of said arms of the third interferometer means being configured shorter than the corresponding arm of the first and second interferometer means, and wherein the wavelength determining means determines the wavelength based on the first, second and third output signals.

9. The wavelength meter of any preceding claim, further comprising means for determining the linewidth of the optical signal based on the first and second output signals.

10. The wavelength meter of any preceding claim, wherein the input means comprises a first Multi-Mode Interference (MMI) coupler, wherein the first reference and first delay arms are connected to a second MMI coupler for providing the first output signal and wherein the second reference and second delay arms are connected to a third MMI coupler for providing the second output signal.

11. The wavelength meter of any preceding claim, provided on a monolithic integrated circuit.

12. The wavelength meter of claim 11, wherein the integrated circuit further comprises the optical source.

13. The wavelength meter of any preceding claim, wherein the optical source is a laser.

14. A method for determining a wavelength, wherein the effect of a wavelength change is differentiated from the effect of a temperature change, comprising

receiving, at a first interferometer means, an optical signal from an optical source, the first interferometer means comprising a first reference arm and a first delay arm, to produce a first output signal;

simultaneously receiving, at a second interferometer means, the optical signal from the optical source, the second interferometer means comprising a second reference arm and a second delay arm, to produce a second output signal, wherein at least one of the second reference and the second delay arms of the second interferometer means is configured to have a different thermo-optic coefficient to group index ($\theta{:}n_g$) ratio than the corresponding first reference and the first delay arm of the first interferometer means; and

determining a wavelength of the optical signal based on the first and second output signals.

**Patentansprüche**

1. Wellenlängenmesser (40) zum Differenzieren des Effekts einer Wellenlängenänderung vom Effekt einer Temperaturänderung, der Folgendes umfasst:

   ein Eingabemittel zum Empfangen eines optischen Signals von einer optischen Quelle (1, 16);
   ein erstes Interferometermittel zum Empfangen des optischen Signals (3) vom Eingabemittel und Ausgeben eines ersten Ausgangssignals, wobei das erste Interferometermittel einen ersten Referenzarm (18) und einen ersten Verzögerungsarm (19) umfasst;
   ein zweites Interferometermittel zum gleichzeitigen Empfangen des optischen Signals (3A) vom Eingabemittel und Ausgeben eines zweiten Ausgangssignals, wobei das zweite Interferometermittel einen zweiten Referenzarm (20) und einen zweiten Verzögerungsarm (22) umfasst, wobei mindestens einer des zweiten Referenz- und des zweiten Verzögerungsarms des zweiten Interferometermittels dazu ausgelegt ist, ein anderes Verhältnis zwischen einem thermooptischen Koeffizienten und einem Gruppenindex ($\theta{:}n_g$) als der entsprechende erste Referenzarm und der erste Verzögerungsarm des ersten Interferometermittels aufzuweisen; und
   ein Mittel (28) zum Bestimmen einer Wellenlänge des optischen Signals auf Basis des ersten und des zweiten Ausgangssignals.

2. Wellenlängenmesser nach Anspruch 1, wobei das erste und das zweite Ausgangssignal eine Phasendifferenz zwischen dem Referenz- und dem Verzögerungsarm des ersten und des zweiten Interferometermittels anzeigen, wobei das Mittel zum Bestimmen der Wellenlänge dazu ausgelegt ist, die Wellenlänge auf Basis der Phasendifferenz zu bestimmen.

3. Wellenlängenmesser nach Anspruch 1 oder 2, wobei das erste und das zweite Interferometermittel Mach-Zehnder-Interferometer umfassen.

4. Wellenlängenmesser nach einem der vorhergehenden Ansprüche, wobei die Arme Lichtwellenleiter sind und wobei mindestens einer der Arme des zweiten Interferometermittels eine andere Breite und/oder Höhe aufweist als die des ersten Interferometermittels.

5. Wellenlängenmesser nach einem der vorhergehenden Ansprüche, wobei die Arme Lichtwellenleiter sind und wobei mindestens einer der Arme des zweiten Interferometermittels eine andere Querschnittsform aufweist als die des ersten Interferometermittels.

6. Wellenlängenmesser nach einem der vorhergehenden Ansprüche, wobei mindestens einer der Arme des zweiten Interferometermittels von einem anderen Material umgeben ist und/oder sich in ein anderes Material ausbreitet als das des ersten Interferometermittels.

7. Wellenlängenmesser nach einem der vorhergehenden Ansprüche, wobei mindestens einer der Arme des zweiten Interferometermittels aus einem anderen Material gebildet ist als das des ersten Interferometermittels.

8. Wellenlängenmesser nach einem der vorhergehenden Ansprüche, der ferner ein drittes Interferometermittel zum gleichzeitigen Empfangen des optischen Signals vom Eingabemittel und Ausgeben eines dritten Ausgangssignals umfasst, wobei das dritte Interferometermittel einen dritten Referenzarm und einen dritten Verzögerungsarm umfasst, wobei mindestens einer der Arme des dritten Interferometermittels dazu ausgelegt ist, kürzer zu sein als der entsprechende Arm des ersten und des zweiten Interferometermittels, und wobei das Wellenlängenbestimmungsmittel die Wellenlänge auf Basis des ersten, des zweiten und des dritten Ausgangssignals bestimmt.

9. Wellenlängenmesser nach einem der vorhergehenden Ansprüche, der ferner ein Mittel zum Bestimmen der Linienbreite des optischen Signals auf Basis des ersten und des zweiten Ausgangssignals umfasst.

**10.** Wellenlängenmesser nach einem der vorhergehenden Ansprüche, wobei das Eingabemittel einen ersten Multimodeinterferenz(MMI)-Koppler umfasst, wobei der erste Referenz- und der erste Verzögerungsarm zum Bereitstellen des ersten Ausgangssignals mit einem zweiten MMI-Koppler verbunden sind und wobei der zweite Referenz- und der zweite Verzögerungsarm zum Bereitstellen des zweiten Ausgangssignals mit einem dritten MMI-Koppler verbunden sind.

**11.** Wellenlängenmesser nach einem der vorhergehenden Ansprüche, der auf einer monolithischen integrierten Schaltung bereitgestellt ist.

**12.** Wellenlängenmesser nach Anspruch 11, wobei die integrierte Schaltung ferner die optische Quelle umfasst.

**13.** Wellenlängenmesser nach einem der vorhergehenden Ansprüche, wobei die optische Quelle ein Laser ist.

**14.** Verfahren zum Bestimmen einer Wellenlänge, wobei der Effekt einer Wellenlängenänderung vom Effekt einer Temperaturänderung differenziert wird, das Folgendes umfasst

Empfangen eines optischen Signals an einem ersten Interferometermittel von einer optischen Quelle, wobei das erste Interferometermittel einen ersten Referenzarm und einen ersten Verzögerungsarm umfasst, um ein erstes Ausgangssignal zu produzieren;

gleichzeitiges Empfangen des optischen Signals an einem zweiten Interferometermittel von der optischen Quelle, wobei das zweite Interferometermittel einen zweiten Referenzarm und einen zweiten Verzögerungsarm umfasst, um ein zweites Ausgangssignal zu produzieren, wobei mindestens einer des zweiten Referenz- und des zweiten Verzögerungsarms des zweiten Interferometermittels dazu ausgelegt ist, ein anderes Verhältnis zwischen einem thermooptischen Koeffizienten und einem Gruppenindex ($\theta{:}n_g$) als der entsprechende erste Referenz- und der erste Verzögerungsarm des ersten Interferometermittels aufzuweisen; und

Bestimmen einer Wellenlänge des optischen Signals auf Basis des ersten und des zweiten Ausgangssignals.

**Revendications**

**1.** Dispositif de mesure de longueur d'onde (40) pour différencier l'effet d'un changement de longueur d'onde de l'effet d'un changement de température, comprenant :

un moyen d'entrée pour recevoir un signal optique provenant d'une source optique (1, 16) ;

un premier moyen d'interféromètre pour recevoir le signal optique (3) provenant du moyen d'entrée et délivrer un premier signal de sortie, le premier moyen d'interféromètre comprenant un premier bras de référence (18) et un premier bras de retard (19) ;

un deuxième moyen d'interféromètre pour recevoir simultanément le signal optique (3A) provenant du moyen d'entrée et délivrer un deuxième signal de sortie, le deuxième moyen d'interféromètre comprenant un deuxième bras de référence (20) et un deuxième bras de retard (22), dans lequel au moins un parmi le deuxième bras de référence et le deuxième bras de retard du deuxième moyen d'interféromètre est configuré pour avoir un rapport coefficient thermo-optique sur indice de groupe ($\theta{:}n_g$) différent du premier bras de référence et du premier bras de retard correspondants du premier moyen d'interféromètre ; et

un moyen (28) pour déterminer une longueur d'onde du signal optique sur la base des premier et deuxième signaux de sortie.

**2.** Dispositif de mesure de longueur d'onde selon la revendication 1, dans lequel les premier et deuxième signaux de sortie sont indicatifs d'une différence de phase entre les bras de référence et de retard des premier et deuxième moyens d'interféromètre, le moyen pour déterminer la longueur d'onde étant configuré pour déterminer la longueur d'onde sur la base de ladite différence de phase.

**3.** Dispositif de mesure de longueur d'onde selon la revendication 1 ou la revendication 2, dans lequel les premier et deuxième moyens d'interféromètre comprennent des interféromètres Mach-Zehnder.

**4.** Dispositif de mesure de longueur d'onde selon l'une quelconque des revendications précédentes, dans lequel les bras sont des guides d'ondes et dans lequel au moins l'un desdits bras du deuxième moyen d'interféromètre a une largeur différente et/ou une hauteur différente de celle du premier moyen d'interféromètre.

**5.** Dispositif de mesure de longueur d'onde selon l'une quelconque des revendications précédentes, dans lequel les bras sont des guides d'ondes et dans lequel au moins l'un desdits bras du deuxième moyen d'interféromètre a une forme de section transversale différente de celle du premier moyen d'interféromètre.

**6.** Dispositif de mesure de longueur d'onde selon l'une quelconque des revendications précédentes, dans lequel au moins l'un desdits bras du deuxième moyen d'interféromètre est entouré d'un matériau différent et/ou se propage dans un matériau différent de celui du premier moyen d'interféromètre.

**7.** Dispositif de mesure de longueur d'onde selon l'une quelconque des revendications précédentes, dans lequel au moins l'un desdits bras du deuxième moyen d'interféromètre est formé d'un matériau différent de celui du premier moyen d'interféromètre.

**8.** Dispositif de mesure de longueur d'onde selon l'une quelconque des revendications précédentes, comprenant en outre un troisième moyen d'interféromètre pour recevoir simultanément le signal optique provenant du moyen d'entrée et délivrer un troisième signal de sortie, le troisième moyen d'interféromètre comprenant un troisième bras de référence et un troisième bras de retard, au moins un desdits bras du troisième moyen d'interféromètre étant configuré plus court que le bras correspondant des premier et deuxième moyens d'interféromètre, et dans lequel le moyen de détermination de longueur d'onde détermine la longueur d'onde sur la base des premier, deuxième et troisième signaux de sortie.

**9.** Dispositif de mesure de longueur d'onde selon l'une quelconque des revendications précédentes, comprenant en outre un moyen pour déterminer la largeur de ligne du signal optique sur la base des premier et deuxième signaux de sorties.

**10.** Dispositif de mesure de longueur d'onde selon l'une quelconque des revendications précédentes, dans lequel le moyen d'entrée comprend un premier coupleur d'interférence multimode (MMI), dans lequel le premier bras de référence et le premier bras de retard sont connectés à un deuxième coupleur MMI pour fournir le premier signal de sortie et dans lequel le deuxième bras de référence et le deuxième bras de retard sont connectés à un troisième coupleur MMI pour fournir le deuxième signal de sortie.

**11.** Dispositif de mesure de longueur d'onde selon l'une quelconque des revendications précédentes, prévu sur un circuit intégré monolithique.

**12.** Dispositif de mesure de longueur d'onde selon la revendication 11, dans lequel le circuit intégré comprend en outre la source optique.

**13.** Dispositif de mesure de longueur d'onde selon l'une quelconque des revendications précédentes, dans lequel la source optique est un laser.

**14.** Procédé pour déterminer une longueur d'onde, dans lequel l'effet d'un changement de longueur d'onde est différencié de l'effet d'un changement de température, comprenant les étapes consistant à

recevoir, au niveau d'un premier moyen d'interféromètre, un signal optique provenant d'une source optique, le premier moyen d'interféromètre comprenant un premier bras de référence et un premier bras de retard, pour produire un premier signal de sortie ;
recevoir simultanément, au niveau d'un deuxième moyen d'interféromètre, le signal optique provenant de la source optique, le deuxième moyen d'interféromètre comprenant un deuxième bras de référence et un deuxième bras de retard, pour produire un deuxième signal de sortie, dans lequel au moins un parmi le deuxième bras de référence et le deuxième bras de retard du deuxième moyen d'interféromètre est configuré pour avoir un rapport coefficient thermo-optique sur indice de groupe ($\theta{:}n_g$) différent du premier bras de référence et du premier bras de retard correspondants du premier moyen d'interféromètre ; et
déterminer une longueur d'onde du signal optique sur la base des premier et deuxième signaux de sortie.

FIG. 1

PHASE SHIFT (0 OR Π/2)

PHASE SHIFT (0 OR Π/2)

50% REFLECTOR    100% REFLECTOR

EP 3 644 031 B1

14

FIG. 2

*FIG. 3*

*FIG. 4*

EP 3 644 031 B1

FIG. 4

5.1

RECEIVE OPTICAL SIGNAL

5.2

RECEIVE OUTPUTL SIGNAL
FROM FIRST INTEFEROMETER
COMPRISING FIRST REFERENCE
ARM & FIRST DELAY ARM

5.3

RECEIVE OUTPUT SIGNAL FROM
SECOND INTEFEROMETER
COMPRISING SECOND REFERENCE
ARM & SECOND DELAY ARM

5.4

DETERMINE WAVELENGTH OF
OPTICAL SIGNAL

*FIG. 5*

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIANG, CHAO et al.** Integrated chip-scale Si3N4 wavemeter with narrow free spectral range and high stability. *Optics Letters,* 2016, vol. 41 (14